# EUROPEAN PATENT APPLICATION

(11) **EP 2 647 275 A2**
(43) Date of publication of application: **09.10.2013**
(21) Application number: 11844136.9
(22) Date of filing: 07.11.2011
(51) Int. Cl.: A01B 59/06, A01B 63/108, A01B 63/104, A01B 49/00

(54) **CONNECTION DEVICE FOR TRACTOR WORK**

(30) Priority: 30.11.2010 KR 20100120896; 18.02.2011 KR 20110001365 U; 30.06.2011 KR 20110064825; 05.10.2011 KR 20110101453; 05.10.2011 KR 20110101454; 05.10.2011 KR 20110010455
(71) Applicant: Song Hyun Co., Ltd., Hampyeong-gun, Jeollanam-do 525-813 (KR)
(72) Inventor: OH, Dae Seok, Gwangju 502-260 (KR)
(74) Representative: Zech, Stefan Markus
(86) International application number: PCT/KR2011/008395
(87) International publication number: WO 2012/074209

(57) **Abstract**

Disclosed herein is a connection device for tractor implements. The connection device includes a main frame (200), a slider body (400) and an implement connection unit (300). A distance adjustment cylinder (250) is installed between the slider bodies. A slider (430) is slidably provided on each slider body. A locking rod (410) is provided in an upper portion of the slider body so that a hook (316) of the implement connection unit is hooked over the locking rod so as to be slidable. A connection part (420) is provided on a lower portion of the slider body such that, when the slider body slides, the connection part is coupled to a fastening part (317) of the implement connection unit. When the distance adjustment cylinder is operated, the distance between the slider bodies is adjusted and the fastening part and the connection part are coupled to or separated from each other.

## Description

### Technical Field

The present invention relates, in general, to connection devices for tractor implements and, more particularly, to a connection device for tractor implements which enables a worker to move an implement such as a bucket to the left or the right in response to work conditions or work environment, thus increasing work efficiency, and is configured such that a large weight of the implement is uniformly applied to the connection device rather than being unevenly applied thereto and, particularly, various kinds of implements having different work purposes can be used together.

### Background Art

Generally, agricultural tractors include a loader to which an implement such as a bucket, etc. is removably mounted to easily conduct different types of work. In the conventional loader, a rotary pin is used to mount the bucket to the loader or separate it therefrom. Because it is difficult to couple the rotary pin to the loader or remove it therefrom, the mounting or removal of the bucket cannot be easily conducted.

In an effort to overcome the above-mentioned problem, a connection device was proposed in Korean Utility Model Registration No. 0312761 (Front loader coupler for tractors). However, the coupler of this technique is problematic in that the structure thereof is complex, and the operation thereof is inconvenient.

Given this, several connection devices which have simple structures to make mounting and removal of a bucket easy were proposed in Korean Utility Model Registration No. 0343858 (Structure of device for removably mounting bucket to loader of agriculture tractor), No. 0416471 (Connection device for tractor implements) and No. 0413755 (Connection device for tractor implements).

However, in the above techniques, the connection device that has been in the locked state may be undesirably unlocked by external pressure or through carelessness. Furthermore, there is a problem in that when the connection device is unlocked, a hook bracket which has been fixed to a bucket is removed from an attach bracket, whereby the bucket may be undesirably separated from the device, thus potentially causing an accident.

Moreover, only when the attach bracket precisely enters the hook bracket fixed to the bucket can they be coupled to each other, thus it is difficult to attach the bucket to the connection device, and the process requires a lot of work and time.

Further, in these conventional techniques, it is impossible to move the bucket to the left or the right after the bucket has been mounted to the connection device. Therefore, work using the tractor cannot be effectively conducted in a limited space. Typically, because the length of the bucket is less than the width of the tractor, spaces in which work is impossible exist at the left and right sides of the tractor.

A technique to solve the above problem was proposed in Korean Patent Laid-open Publication No. 2010-0012669 (Bucket device having left-right movable structure). However, this technique involves a very complex structure and shape, thus increasing the production cost. Further, there is the possibility of the bucket being detached by external pressure. Because this technique is configured such that it can only move to the left or the right, two hydraulic cylinders must be operated at the same time to move the bucket to the left or the right without any parts being damaged. Thus, there is a likelihood of a part being damaged through carelessness.

Moreover, in the conventional techniques, only one implement can be mounted to a single connection device. In other words, different kinds of implements need corresponding connection devices, thus increasing the operational costs.

### Disclosure

### Technical Problem

Accordingly, the present invention has been made keeping in mind the above problems occurring in the prior art, and an object of the present invention is to provide a connection device for tractor implements which is configured such that an implement such as a bucket can be smoothly coupled to an implement connection unit only by moving a slider body without it being required to precisely insert the implement into the implement connection unit.

Another object of the present invention is to provide a connection device for tractor implements which enables a worker to move the implement to the left or the right in response to work conditions or work environment, thus enhancing work efficiency.

A further object of the present invention is to provide a connection device for tractor implements which is configured such that a heavy implement can be easily mounted to the connection device and the weight of the implement can be uniformly applied to the connection device rather than being unevenly applied thereto and, particularly, even if there are different kinds of implements which are used for different work purposes and in different fields, each implement can be easily mounted to or removed from the connection device, and two kinds of implements can be used together.

Yet another object of the present invention is to provide a connection device for tractor implements in which, to mount an implement such as a clamp to the connection device, a loader has only to be operated while the implement is placed on the ground, whereby it is convenient to handle or use (for example, the implement that has been detached from the connection device can be easily stored), and in which the implement connection unit has an improved structure to smoothly slide.

### Technical Solution

In order to accomplish the above objects, the present invention provides a connection device for tractor implements, including a main frame mounted to a front end of a loader of a tractor by a coupler, a slide-movable slider body mounted on each of both sides of a front surface of the main frame, and an implement connection unit installed between the implement and the slider body. The connection device further includes a distance adjustment cylinder installed between the slider bodies to adjust a distance between the slider bodies. A slider is provided on each of the slider bodies so as to be slidable with respect to the main frame, a locking rod is horizontally provided in an upper portion of the slider body so that a hook provided on an upper portion of the implement connection unit is hooked over the locking rod so as to be slidable along the locking rod, and a connection part is provided on a lower portion of a side wall of the slider body such that, when the slider body slides, the connection part is coupled to a fastening part provided on a lower portion of the implement connection unit. When the distance adjustment cylinder is operated, the distance between the slider bodies is adjusted and the fastening part and the connection part are coupled to or separated from each other.

### Advantageous Effects

According to the present invention, a worker can move an implement such as a bucket to the left or the right in response to work conditions or a work environment so that the work efficiency can be enhanced. When the implement is coupled to a loader, even if the implement is not precisely positioned with respect to the loader, they can be reliably coupled to each other by simple manipulation.

Furthermore, the weight of the implement can be uniformly applied to the connection device rather than being unevenly applied thereto. Therefore, during work using the implement, the stability of the implement can be reliably maintained. Also, the lifetime of the connection device can be extended. Particularly, different kinds of implements which are used for different work purposes and in different fields can be easily removably mounted to the loader, and two kinds of implements can be used together, thus being convenient for the user.

In addition, the implement connection unit has an improved structure so that it can slide smoothly, whereby the connection device can be more reliably operated.

### Description of Drawings

Fig. 1 is an exploded perspective view illustrating a connection device for tractor implements, according to a first embodiment of the present invention;
Fig. 2 is an assembled perspective view of Fig. 1;
Fig. 3 is a front view showing an implement connection unit hooked over a slider body according to the first embodiment of the present invention;
Fig. 4 is a front view showing the implement connection unit coupled to the slider body by moving the slider body according to the first embodiment of the present invention;
Fig. 5 is a plan view showing an attachment state of a bucket according to the first embodiment of the present invention;
Fig. 6 is a plan view showing the bucket moved to the right by movement of the slider body from the state of Fig. 5;
Fig. 7 is a view illustrating a connection device for tractor implements, according to a second embodiment of the present invention;
Fig. 8 is an exploded sectional view illustrating a coupling structure between a main frame and a slider body of the connection device according to the second embodiment of the present invention;
Fig. 9 is an assembled view of Fig. 8;
Fig. 10 is a view illustrating a connection device for tractor implements, according to a third embodiment of the present invention;
Fig. 11 is an exploded sectional view illustrating a coupling structure between a main frame and a slider body of the connection device according to the third embodiment of the present invention;
Fig. 12 is an assembled view of Fig. 11;
Fig. 13 is an exploded perspective view illustrating a connection device for tractor implements, according to a fourth embodiment of the present invention;
Fig. 14 is an assembled view of Fig. 13;
Fig. 15 is an exploded perspective view showing a second implement coupled to a first side of the slider body according to the fourth embodiment of the present invention;
Fig. 16 is a perspective view showing the connection device provided with the second implement of Fig. 15;
Fig. 17 is an exploded perspective view showing a second implement coupled to a second side of the slider body according to the fourth embodiment of the present invention;
Fig. 18 is a perspective view showing the connection device provided with the second implement of Fig. 17;
Fig. 19 is a perspective view illustrating a connection device for tractor implements which is mounted to a loader, and an implement coupled to the connection device, according to a fifth embodiment of the present invention;
Fig. 20 is an exploded perspective view of the connection device for tractor implements according to the fifth embodiment of the present invention;
Fig. 21 is an exploded perspective view of the implement connection unit of the connection device according to the fifth embodiment of the present invention;
Fig. 22 is a sectional view of the implement connection unit of the connection device according to the fifth embodiment of the present invention;
Figs. 23 and 24 are views showing the elastic operation of a spring on a separation guide rod of the connection device according to the fifth embodiment of the present invention;
Fig. 25 is a view showing the installation of a fixing piece for connection of a connection unit body in the connection device according to the fifth embodiment of the present invention;
Fig. 26 is a perspective view illustrating a connection device for tractor implements which is mounted to a loader, and an implement coupled to the connection device, according to a sixth embodiment of the present invention;
Fig. 27 is an exploded perspective view of the connection device according to the sixth embodiment of the present invention;
Fig. 28 is an exploded perspective view illustrating an implement connection unit of the connection device according to the sixth embodiment of the present invention;
Fig. 29 is a sectional view showing the implement connection unit of the connection device according to the sixth embodiment of the present invention;
Figs. 30 and 31 are views showing the elastic operation of a spring on a separation guide rod of the connection device according to the sixth embodiment of the present invention; and
Fig. 32 is a view showing the installation of a fixing piece for connection of a connection unit body in the connection device according to the sixth embodiment of the present invention.

### Best Mode

Hereinafter, a connection device for tractor implements according to the present invention will be described in detail with reference to the attached drawings.

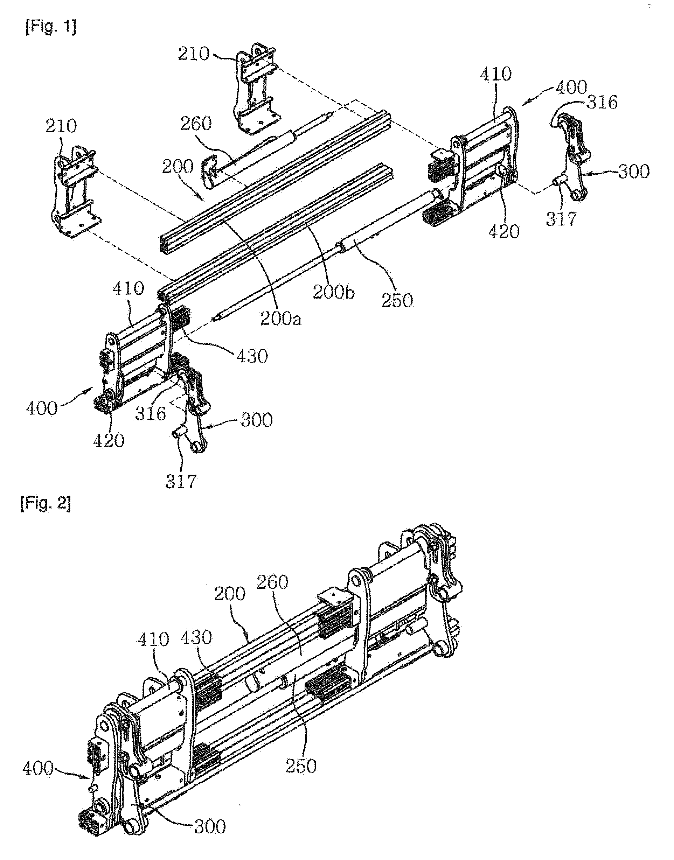

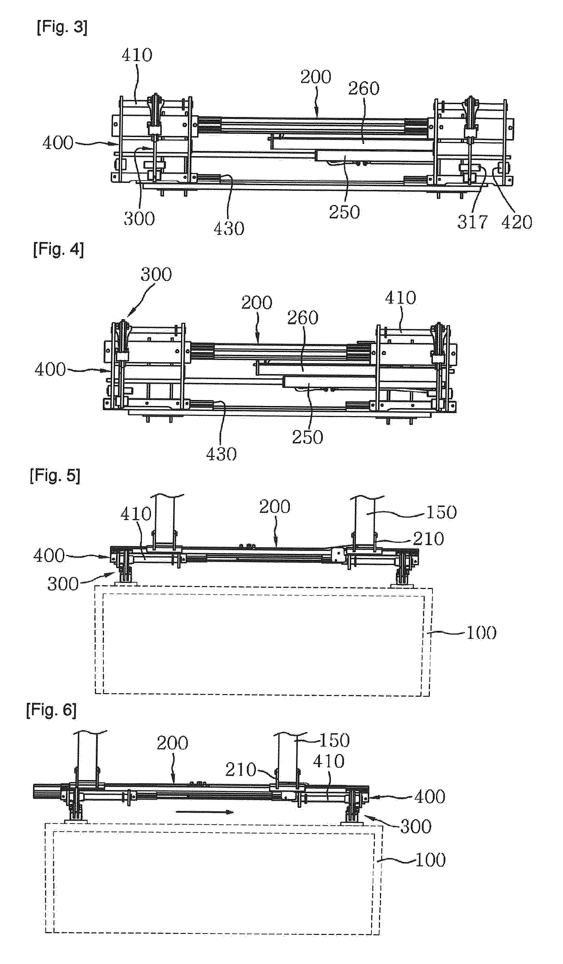

Fig. 1 is an exploded perspective view illustrating a connection device for tractor implements, according to a first embodiment of the present invention. Fig. 2 is an assembled perspective view of Fig. 1. Fig. 3 is a front view showing an implement connection unit hooked over a slider body according to the first embodiment of the present invention. Fig. 4 is a front view showing the implement connection unit coupled to the slider body by moving the slider body according to the first embodiment of the present invention. Fig. 5 is a plan view showing an attachment state of a bucket according to the first embodiment of the present invention. Fig. 6 is a plan view showing the bucket moved to the right by movement of the slider body from the state of Fig. 5.

As shown in Figs. 1 through 6, the connection device for tractor implements according to the first embodiment of the present invention is a device which an implement 100 such as a bucket to a loader 150. The connection device is installed on a front end of the loader 150 connected to a tractor and functions to facilitate coupling of the implement 100 to the loader 150 or separation of it therefrom.

Referring to Fig. 1, the connection device includes implement connection units 300, slider bodies 400 each of which has a locking rod 410 and a connection part 420, respectively, on an upper portion and a side wall thereof to be coupled to the corresponding implement connection unit 300, a main frame 200 which is coupled to rear surfaces of the slider bodies 400, and a distance adjustment cylinder 250 which connects the slider bodies 400 to each other and adjusts the distance between the slider bodies 400.

The implement connection units 300 are assembled with or welded to left and right portions of the implement 100 such as a bucket. Each implement connection unit 300 has, on an upper portion thereof, a hook 316 which is hooked over the corresponding locking rod 410. Further, the implement connection unit 300 has, on a lower portion thereof, a fastening part 317 which is connected to the corresponding connection part 420.

In an embodiment of the construction of the fastening part 317 and the connection part 420, as shown in Fig. 1, the fastening part 317 may be a protrusion which protrudes towards the connection part 420, and the connection part 420 may be a through hole which is formed in the side wall of the slider body 400 so that the protrusion is inserted into the through hole when the slider body 400 slides in one direction.

Therefore, when it is necessary to couple each of the implement connection units 300 connected to the implement 100 to the corresponding slider body 400, the slider body 400 is moved such that the protrusion is inserted into the through hole, whereby the implement connection unit 300 can be fastened to the slider body 400. On the contrary, when separation of the implement connection unit 300 from the slider body 400 is required, the slider body 400 is returned to its original position and then the hook 316 that has been hooked over the locking rod 410 is removed therefrom, whereby the implement connection unit 300 can be removed from the slider body 400.

In another embodiment, the fastening part 317 and the connection part 420 may have structures opposite to those of the above embodiment such that they can be coupled to each other by an insert coupling method. In other words, the fastening part may be a through hole, while the connection part may be a protrusion which can be inserted into the through hole.

Each slider body 400 is configured to be separably coupled to the corresponding implement connection unit 300. The two slide bodies 400 are respectively provided on the opposite ends of the main frame in such a way that upper and lower portions of each slider body 400 are respectively coupled to upper and lower frames 200a and 200b that constitute the main frame 200.

As shown in Fig. 1, in each slider body 400, the locking rod 410 horizontally extends a predetermined length in the upper portion of the slider body 400 so that the hook 316 of the implement connection unit 300 is hooked over the locking rod 410 when the slider body 400 is moving. The connection part 420, to which the fastening part 317 of the implement connection unit is connected, is formed in the lower portion of a left or right side wall of the slider body 400. As shown in Figs. 2 through 4, the connection part 420 can be coupled to the implement connection unit 300 by moving the slider body 400 in a predetermined direction.

The cross-sectional shape of the locking rod 410 is not limited to a special shape such as a circular or rectangular shape. The hook 316 has a shape corresponding to the cross-sectional shape of the locking rod 410 as the hook 316 is hooked over the locking rod 410.

The main frame 200 includes the upper frame and the lower frame which are respectively disposed at upper and lower positions. The slider bodies 400 are provided on the respective opposite ends of the front surface of the main frame 200 such that the slider bodies 400 can horizontally reciprocating-slide. Couplers 210, which are coupled to a front end of the loader 150, are mounted to a rear surface of the main frame 200.

A position adjustment cylinder 260 is further installed on the main frame 200 and is connected to either of the slider bodies 400 so that the slider body 400 can reciprocate to the left or the right on the main frame 200.

The position adjustment cylinder 260 is fastened at opposite ends thereof to the main frame 200 and the corresponding slider body 400 and reciprocates the slider body 400 with respect to the main frame 200 to the left or the right. Thus, the implement 100 such as a bucket that is connected to the slider bodies 400 by the implement connection unit 300 can be moved to the left or the right by the operation of the position adjustment cylinder 260.

Therefore, a worker can change the position of the implement 100 by moving the slider body 400 to the left or the right in response to work conditions or circumstances while conducting the work. When the implement 100 is coupled to the loader 150, even if the implement 100 is not precisely positioned with respect to the loader 150, they can be reliably coupled to each other.

Particularly, most buckets are typically smaller than tractors. In this case, spaces in which work is impossible exist to the left or right side of the tractor, but if the connection device of the present invention is used, the bucket can be moved to the left or the right by simple manipulation and used for work.

The distance adjustment cylinder 250 is installed between the two slider bodies 400 such that the slider bodies 400 are connected to each other. The distance adjustment cylinder 250 adjusts the distance between the slider bodies 400 on the main frame 200, thus coupling the connection parts 420 of the slider bodies 400 to the corresponding fastening parts 317 of the implement connection unit 300 or removing them therefrom. In this way, the implement connection units 300 can be coupled to or separated from the corresponding slider bodies 400.

Therefore, even when the tractor is not precisely positioned with respect to the implement 100, if it is within a range defined by the length of the locking rods 410, the implement connection units 300 can be coupled to the slider bodies 400 by means of the distance adjustment cylinder 250. Thereby, not only can the coupling of the implement be facilitated but the installation of the implement can also be completed in a short time.

As such, in the connection device for tractor implements according to the present invention having the above-mentioned construction, the slider bodies 400 are slidably coupled to the main frame 200, and the implement connection units 300 can be easily coupled to the slider bodies 400 by means of the distance adjustment cylinder 250. Further, when work is being conducted, the implement 100 that is coupled to the slider bodies 400 can be moved to the left or the right in response to work circumstances or site conditions by means of the position adjustment cylinder 260.

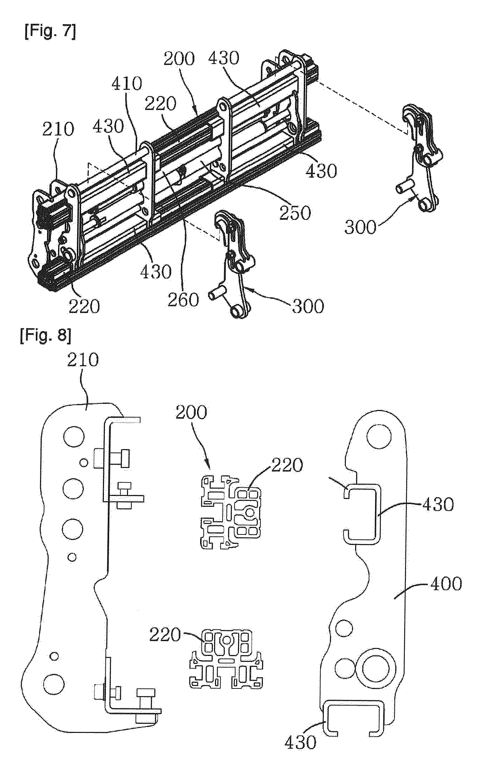

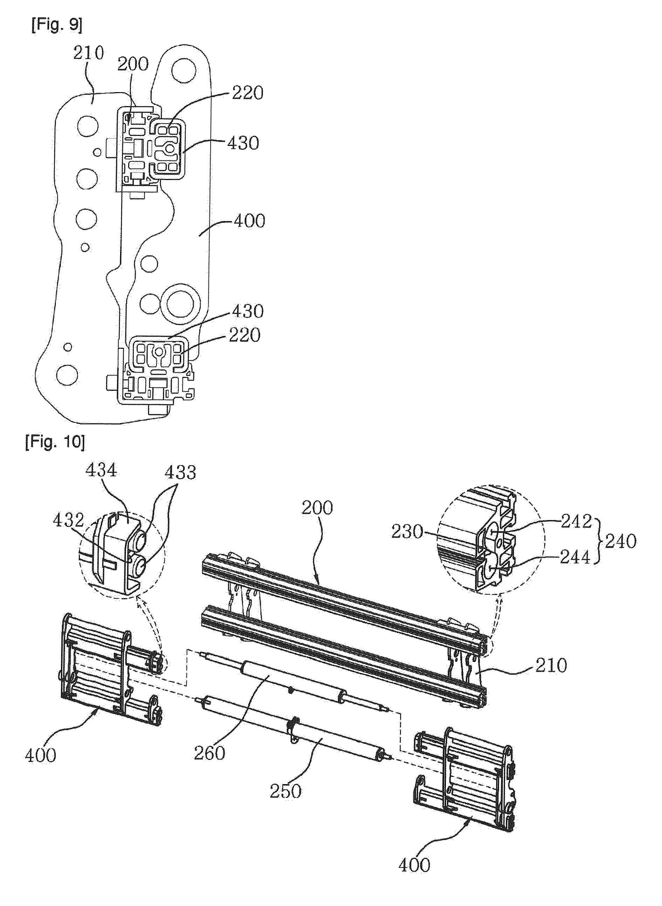

Fig. 7 is a view illustrating a connection device for tractor implements, according to a second embodiment of the present invention. Fig. 8 is an exploded sectional view illustrating a coupling structure between a main frame and a slider body of the connection device according to the second embodiment of the present invention. Fig. 9 is an assembled view of Fig. 8.

As shown in Figs. 7 through 9, in the connection device according to the second embodiment of the present invention, rails 220 are provided on a front surface of the main frame 200 in such a way that the rails 220 integrally protrude from the main frame 200 and extend in a longitudinal direction of the main frame 200. Each slider body 400 is provided with sliders 430 which are connected to the respective rails 220 so as to slidable along the rails 220.

Each slider 430 has an opening only in a portion of one side thereof and receives the corresponding rail 220 through the opening. The reason for this structure is to smoothly slide the slider along the rail 220.

Further, the reason why the opening is formed in a portion of one side of the slider 430 is to allow a neck part which is integrally provided between the main frame and the corresponding rail 220 to move through the opening. The reason why the rail 220 is configured to be protruded outwards from the main frame 200 is to keep the strength of the main frame 200 and smoothly facilitate the sliding motion of the slider 430.

In this embodiment, the rail 220 that is provided on the upper frame 200a of the main frame 200 is oriented forwards from a front surface of the upper frame 200a. The rail 220 that is provided on the lower frame 200b is oriented upwards from an upper surface of the lower frame 200b. The slider 430 that is provided in an upper portion of a rear surface of the slider body is oriented rearwards, and the slider 430 that is provided in a lower portion of the slider body is oriented downwards. The sliders 430 are connected to the corresponding rails.

The rail that is provided on the upper frame 200a functions to support and guide the slide bodies such that they can smoothly move. The rail that is provided on the lower frame 200b functions not only to guide the slide bodies such that they can smoothly move but also to support the slide bodies thereon. Therefore, the implement installed on the connection device of the present invention can be smoothly moved and reliably supported by the connection device. Moreover, the weight of the implement is uniformly applied to the connection device of the present invention rather than being unevenly applied thereto.

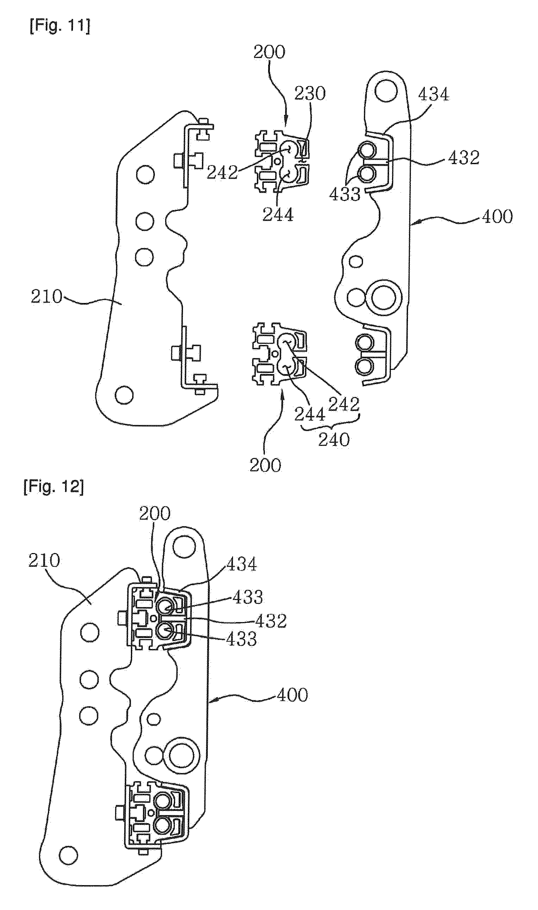

Fig. 10 is a view illustrating a connection device for tractor implements, according to a third embodiment of the present invention. Fig. 11 is an exploded sectional view illustrating a coupling structure between a main frame and a slider body of the connection device according to the third embodiment of the present invention. Fig. 12 is an assembled view of Fig. 11.

As shown in Figs. 10 through 12, in the connection device according to the third embodiment of the present invention, a slot 230 is formed in a front surface of the main frame 200 and extends in a longitudinal direction of the main frame 200. A slider moving hole 240 is longitudinally formed in the main frame 200 such that the slider moving hole 240 communicates with the outside through the slot 230.

The slider moving hole 240 has an upper moving hole 242 and a lower moving hole 244, which are respectively formed at upper and lower positions based on the slot 230, and each of which has a circular cross-section. The upper moving hole 242 and the lower moving hole 244 form an open space at a junction therebetween. The open space is connected to the slot, thus communicating with the outside.

A slider is provided in each slider body and is disposed in the slot so as to be slidable. In detail, the slider 430 includes a guide rail 432 which is protruded outwards from the slider body and disposed in the slot 230, and a moving rail 433 which is provided on a protruded end of the guide rail 432, has a shape corresponding to the slider moving hole 240, and is disposed in the slider moving hole 240 so as to be slidable.

As the moving rail has a shape corresponding to the slider moving hole 240, it includes an upper moving rail and a lower moving rail which are respectively provided at upper and lower positions and disposed in the upper moving hole and the lower moving hole, and each of which has a circular cross-section.

The reason why the slider moving hole 240 has the upper moving hole 242 and the lower moving hole 244 is to prevent the slider from being removed from the slider moving hole in consideration of the fact not only that, when tractor work is carried out using the implement connected to the implement connection unit 300, the weight of the implement and substances loaded on or carried by the implement generates force to move an upper portion and a lower portion of a front part of the main frame that define the slot therebetween away from each other, but also that, because of pressure generated when clamping a substance, the main frame is bulged out in the middle, thus generating force to remove the slider bodies from the main frame at the inner portions thereof rather than at the outer portions.

That is, as shown in Figs. 11 and 12, because the upper and lower moving rails are enclosed by the main frame in such a way that they are respectively disposed in the upper and lower moving holes, the center axes of the moving rails are positioned above and below the slot, in which the guide rail is disposed, rather than being aligned with the slot. Therefore, when a load is applied to the connection device, the force to move the upper and lower portions of the front part of the main frame that define the slot therebetween away from each other is reduced. Even if the upper and lower portions of the front part of the main frame are moved away from each other, the distance that they have been moved away from each other is much shorter than the diameter of the upper or lower moving rail. Therefore, the moving rail can be reliably prevented from being removed from the slider moving hole.

As a result, even when the weight of the implement and a load resulting from the substances loaded on the implement are applied to the connection device, the slider bodies can smoothly and reliably slide on the main frame.

Each slider body 400 is provided with a support rail 434, which receives the slider 430 therein and encloses the upper and lower portions of the front part of the main frame 200 that defines the slot therebetween.

When the moving rail is disposed in the slider moving hole, the support rail 434 is supported by the main frame in such a way that the support rail 434 encloses the upper and lower portions of the front part of the main frame. Therefore, the guide rail can be prevented from being damaged, and the slider body can be guided by the main frame such that it is smoothly and reliably moved. Moreover, the support rail can fundamentally prevent a phenomenon in which the upper and lower portions of the front part of the main frame that define the slot therebetween are moved away from each other by the weight of the implement, etc.

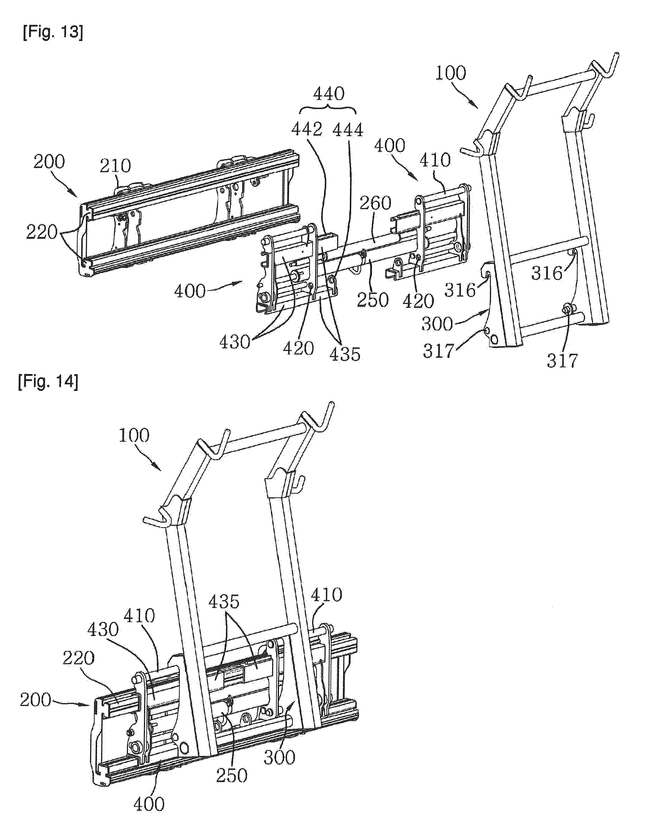

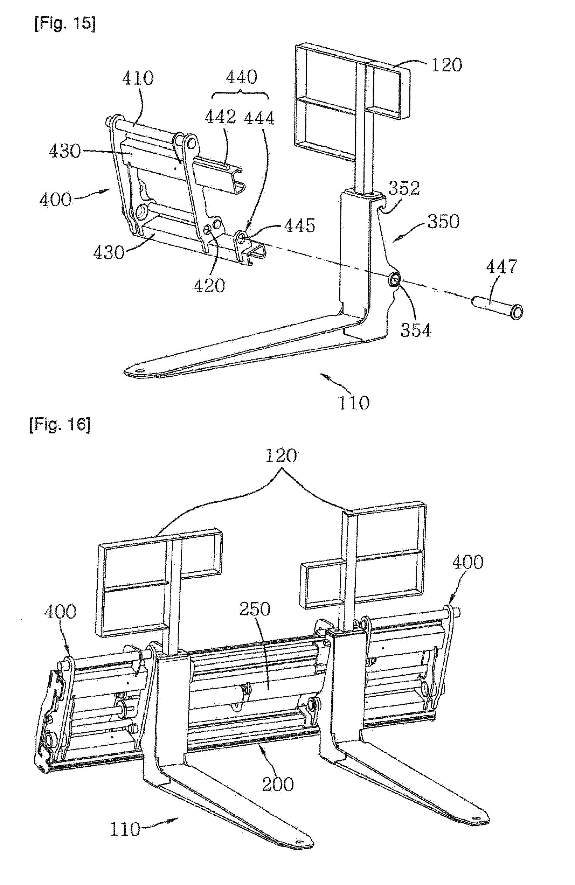

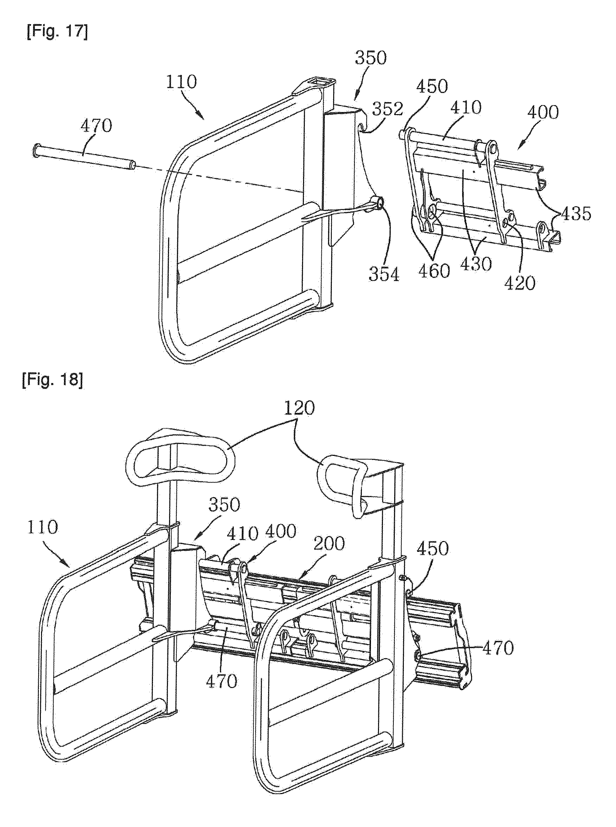

Fig. 13 is an exploded perspective view illustrating a connection device for tractor implements, according to a fourth embodiment of the present invention. Fig. 14 is an assembled view of Fig. 13. Fig. 15 is an exploded perspective view showing a second implement coupled to a first side of the slider body according to the fourth embodiment of the present invention. Fig. 16 is a perspective view showing the connection device provided with the second implement of Fig. 15. Fig. 17 is an exploded perspective view showing a second implement coupled to a second side of the slider body according to the fourth embodiment of the present invention. Fig. 18 is a perspective view showing the connection device provided with the second implement of Fig. 17.

As shown in the drawings, the connection device according to the fourth embodiment of the present invention is provided with at least two kinds of implements having different functions.

For this, on a side (a first side) or each of both sides of each slider body 400, an auxiliary slider 435 integrally extends outwards from each slider 430. Each auxiliary slider 435 has the same shape as that of the corresponding slider 430, and an implement connection part 440 is provided on the auxiliary sliders 435.

The implement connection part 440 is connected to another (second) implement 110 which differs in purpose of use or field from the implement 100 that is connected to the slider bodies 400, so that the connection device of the present invention can be used for multiple purposes.

In this case, different kinds of implements, such as a bucket, a ton bag frame, a bale clamp, a fork lift, etc. which are used for different purposes and in different fields, can be easily and removably mounted together to a tractor by the single connection device, thus enhancing convenience of use for the worker.

The second implement 110 may be either a fork lift or a bale clamp.

Of course, a bucket or a ton bag frame, which are mentioned above, may be used as the second implement, but in the case where the bucket or the ton bag frame is connected to the connection device, it is unnecessary to adjust the width adjustment, and it is difficult to connect the second implement to the connection device. Therefore, it is more preferable that, rather than an implement having a single body, an implement such as a fork lift or a bale clamp which comprises a pair of left and right bodies is connected to the implement connection parts 440.

After the second implement 110 has been mounted to the connection device, the work width of the second implement 110 can be adjusted in such a way that two bodies of the second implement 110 are moved towards or away from each other by sliding the slider bodies 400 using the distance adjustment cylinder 250.

The constructions of the second implement 110 and the implement connection part 440 to which the second implement 110 is connected will be described in detail below. The second implement 110 is assembled with or welded to second implement connection units 350, in the same manner as that of the coupling of the implement 100 to the implement connection units 300. A second hook 352 and a through hole 354 are respectively formed in upper and lower portions of each second implement connection unit 350.

The implement connection part 440 includes a locking stopper 442 which is provided on an upper surface of the upper one of the auxiliary sliders 435 so that the second hook 352 is locked to the locking stopper 442, and a second connection part 444 which is provided on a portion of the lower one of the auxiliary sliders 435 and is removably coupled to a fastening rod 447 that is fastened into the through hole 354.

In this embodiment, the second connection part 444 is a bracket which has a fastening hole 445. The fastening rod is inserted into the fastening hole 445 and the through hole 354.

Meanwhile, in the case where the second implement 110 is either the bale clamp or the fork lift, a support part 120 is installed on the second implement 110 in such a way that it protrudes upwards above the main frame 200.

Therefore, when the second implement 110, such as a bale clamp or a fork lift, is used to carry a target object or place it on top of another, if the target object is comparatively large, the support part 120 supports a rear surface of the target object, thus preventing accidents from occurring during the work process.

In the connection device according to this embodiment, a locking protrusion 450 and a coupling hole 460 which correspond to the locking protrusion 450 and the coupling hole 460 of the second implement connection unit 350 are formed on upper and lower portions of a second side of the slider body 400 that is opposite to the auxiliary slider 435, in other words, opposite to the implement connection part 440, so that the second implement 110 can also be connected to the second side of the slider body 400.

The locking protrusion 450 protrudes from the side wall of the slider body 400 and may be integrally formed with the locking rod 410. The through hole 354 and the coupling hole 460 are connected to each other by a coupling rod 470 such that the associated elements are locked to each other.

In the case where the second implement is coupled to the second side of the slider body 400 that is opposite to the auxiliary slider, to make the coupling of the second implement connection unit 350 more reliable, not only are the second hook and the through hole connected to the locking protrusion 450 and the coupling hole 460, but the second implement connection unit may also be provided enclosing the slider body 400 while the second hook 352 is hooked to the locking rod 410 and the through hole is connected to the coupling hole by the coupling rod 470.

In the connection device for tractor implements according to the fourth embodiment of the present invention, the slider body 400 is installed on the main frame 200 so as to be slidable, and the implement connection unit 300 is coupled to the slider body 400. The connection device of this embodiment can ensure that the weight of the implement 100 is uniformly applied to the connection device rather than being unevenly applied thereto, thus preventing the parts from being damaged.

Furthermore, the implement connection part 440 is provided on the first side of each slider body 400. Therefore, the second implement 110, which differs in purpose of use or field from the implement 100 that is connected to the slider bodies 400, can be connected to the implement connection part 440. As a result, different kinds of implements can be used together by the single connection device, thus being convenient for the user.

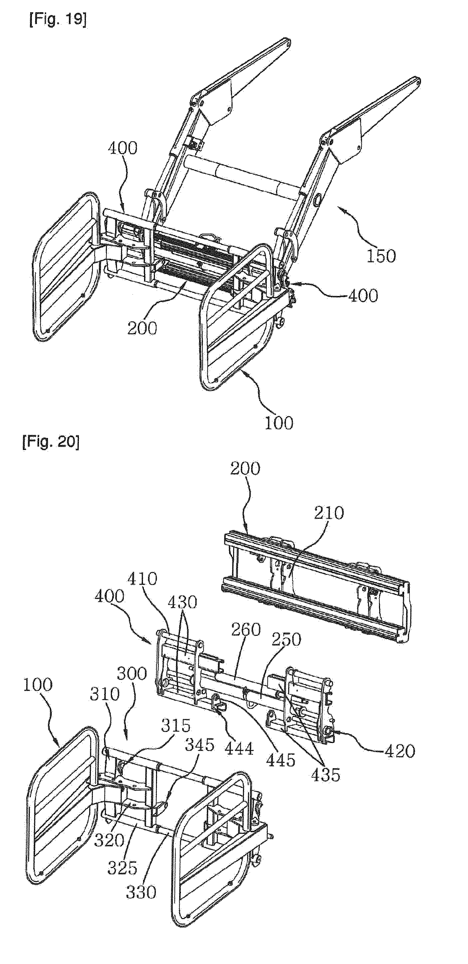

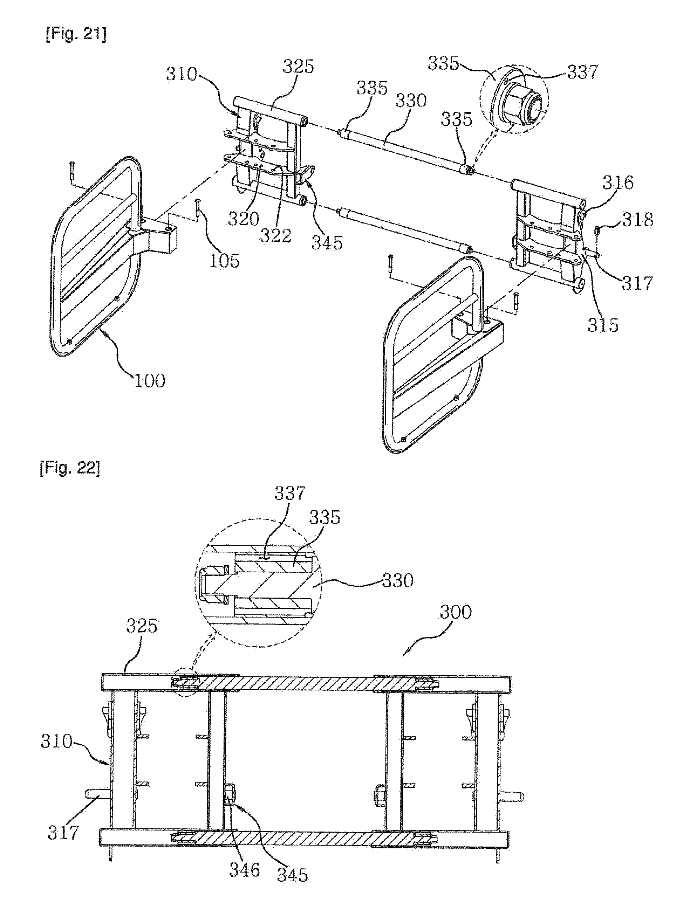

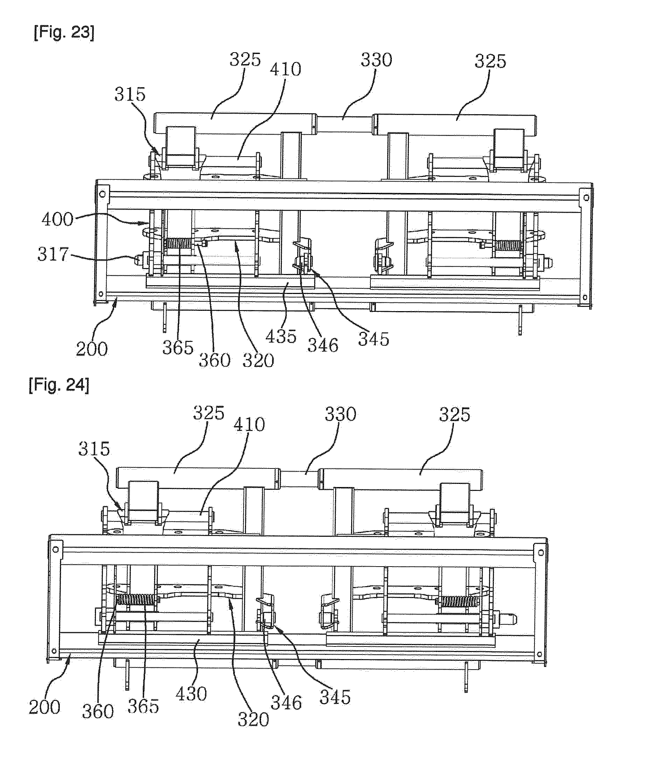

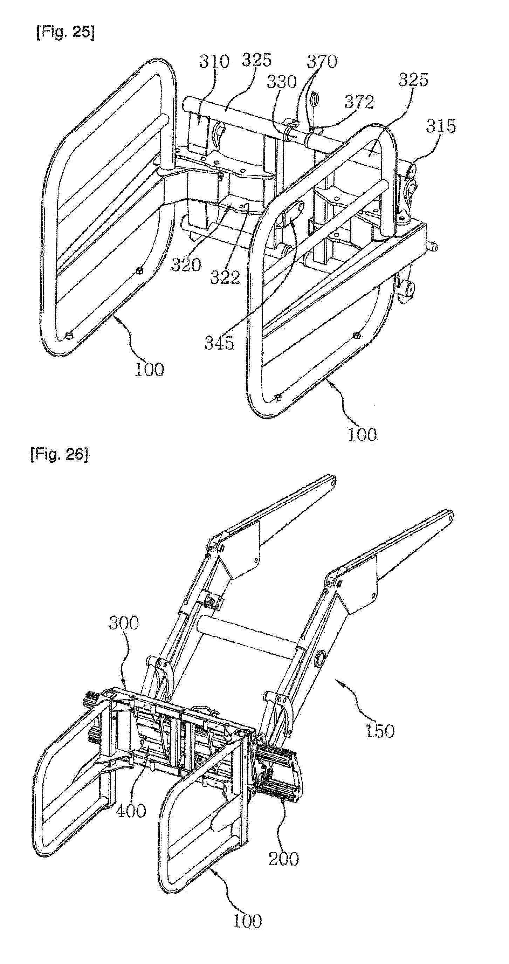

Fig. 19 is a perspective view illustrating a connection device for tractor implements which is mounted to a loader, and an implement coupled to the connection device, according to a fifth embodiment of the present invention. Fig. 20 is an exploded perspective view of the connection device for tractor implements according to the fifth embodiment of the present invention. Fig. 21 is an exploded perspective view of the implement connection unit of the connection device according to the fifth embodiment of the present invention. Fig. 22 is a sectional view of the implement connection unit of the connection device according to the fifth embodiment of the present invention. Figs. 23 and 24 are views showing the elastic operation of a spring on a separation guide rod of the connection device according to the fifth embodiment of the present invention. Fig. 25 is a view showing the installation of a fixing piece for connection of a connection unit body in the connection device according to the fifth embodiment of the present invention

Figs. 19 through 25 illustrate the connection device according to the fifth embodiment of the present invention. The implement connection unit 300 which is installed between the slider bodies and the implement includes: a pair of connection unit bodies 310 each of which is provided with a slider connector 315 on a rear portion thereof so that the connection unit body 310 can be removably mounted to the corresponding slider body 400; an implement connector 320 which is provided on a front portion of each connection unit body 310 to connect the implement to the implement connection unit; frame coupling pipes 325 which are horizontally provided parallel to each other in upper and lower portions of each connection unit body 310, and each of which is filled with fluid; slide frames 330 which are provided parallel to each other at upper and lower positions between the connection unit bodies 310 and are inserted at opposite ends thereof into the corresponding frame coupling pipes 325; and pistons 335 which are provided on respective ends of the slide frames 330 and are moved in the respective frame coupling pipes.

The slider connector 315 is connected to the slider body. A hook 316 which is hooked to the locking rod 410 of the slider body is provided in an upper portion of the slider connector 315. A fastening part 317 which is connected to the connection part 420 is formed in a lower portion of the slider connector 315. The fastening part 317 is provided with a retaining means 318 for retaining the coupling thereof to the connection part 420.

As stated above, the fastening part 317 may be a protrusion which is inserted into and coupled to the connection part, and the retaining means 318 may be a pin or a pin type clamp which is inserted through the protrusion.

The implement connector 320 is provided to be connected to the implement. In an embodiment, the implement connector 320 may be plates which are horizontally provided parallel to each other in a central portion of the connection unit body, and each of which has a connection hole 322 so that the implement can be connected to the implement connector 320 by inserting a connection pin 105 into the connection hole 322 and the implement and tightening a nut over the connection pin 105. Preferably, a plurality of connection holes 322 are formed in the implement connector to make it possible to adjust the position at which the implement is connected to the implement connector.

A sealer is installed on the end of each frame coupling pipe 325 to prevent fluid from leaking between the slide frame 330 and the frame coupling pipe 325. When the connection unit body is moved, fluid moves through a fluid passing hole 337 and causes the connection unit body to smoothly move.

When the connection unit bodies move towards each other, each slide frame is inserted into the corresponding frame coupling pipes. At this time, fluid that is in the frame coupling pipes moves through the fluid passing holes 337 to make the movement of the connection unit bodies smooth. At least one fluid passing hole 337 is preferably formed in each piston 335.

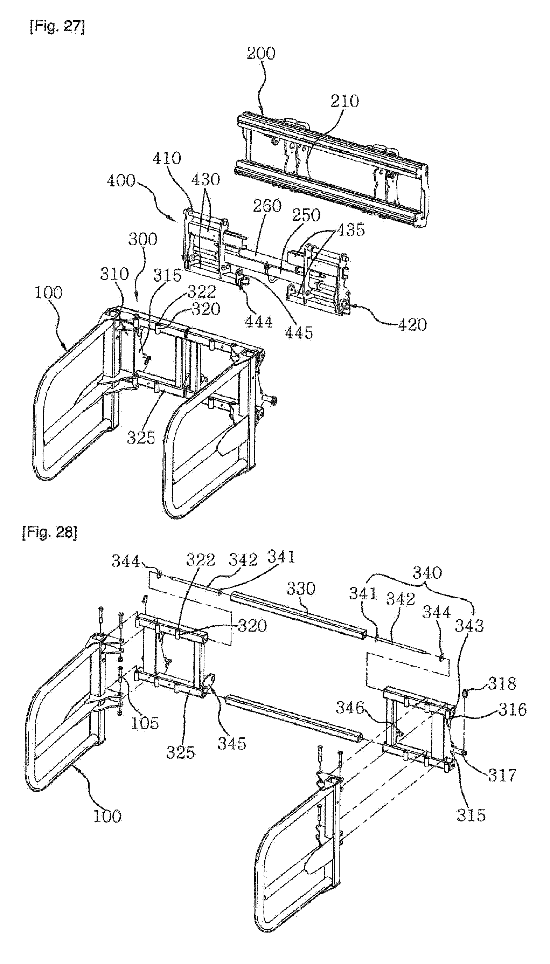

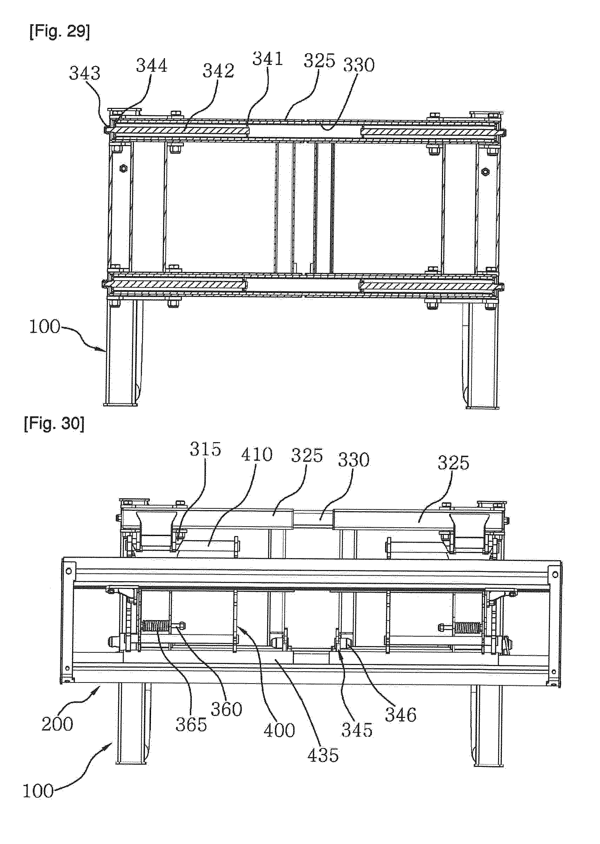

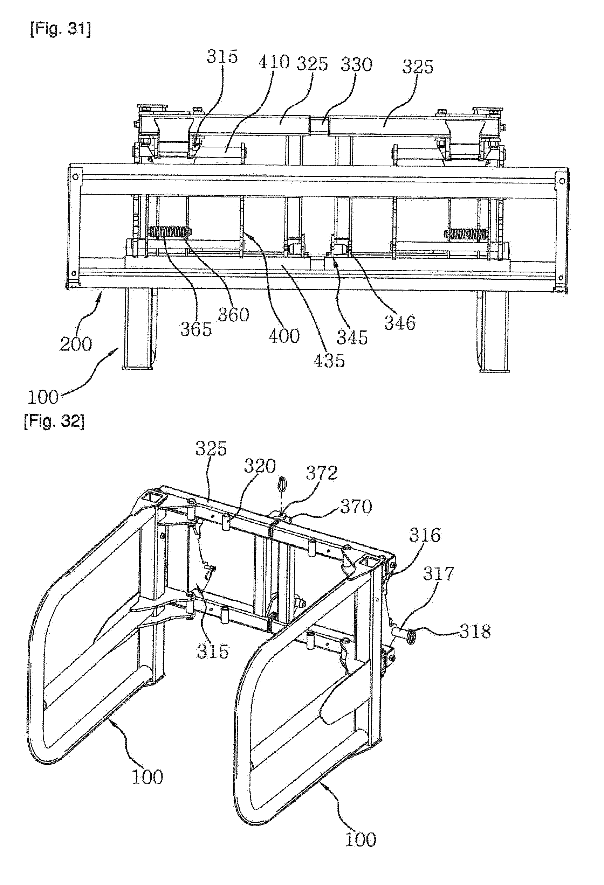

Fig. 26 is a perspective view illustrating a connection device for tractor implements which is mounted to a loader, and an implement coupled to the connection device, according to a sixth embodiment of the present invention. Fig. 27 is an exploded perspective view of the connection device according to the sixth embodiment of the present invention. Fig. 28 is an exploded perspective view illustrating an implement connection unit of the connection device according to the sixth embodiment of the present invention. Fig. 29 is a sectional view showing the implement connection unit of the connection device according to the sixth embodiment of the present invention. Figs. 30 and 31 are views showing the elastic operation of a spring on a separation guide rod of the connection device according to the sixth embodiment of the present invention. Fig. 32 is a view showing the installation of a fixing piece for connection of a connection unit body in the connection device according to the sixth embodiment of the present invention.

Figs. 26 through 32 illustrate the connection device according to the sixth embodiment of the present invention and show another example of the implement connection unit. The implement connection unit 300 is installed between the slider bodies and the implement includes: a pair of connection unit bodies 310, each of which has on a rear portion thereof a slider connector 315 provided with a hook 316 and a fastening part 317 so that the connection unit body 310 can be removably mounted to the corresponding slider body 400; an implement connector 320 which is provided on a front portion of each connection unit body 310 to connect the implement to the implement connection unit; hollow frame coupling pipes 325 which are horizontally provided parallel to each other in upper and lower portions of each connection unit body 310; hollow slide frames 330 which are provided parallel to each other at upper and lower positions between the connection unit bodies 310 and are inserted at opposite ends thereof into the corresponding frame coupling pipes; and movement guide units 340 each of which is movably provided at a first end thereof in the corresponding slide frame 330 and is fixed at a second end thereof to the corresponding frame coupling pipe 325.

The implement connector 320 functions to connect the implement to the implement connection unit and is provided on a predetermined portion of the frame coupling pipes 325 that are provided on the upper and lower portions of the connection unit body. A connection hole 324 is vertically formed in the implement connector 320 so that the implement can be connected to the implement connector 320 by inserting a connection pin 105 into the connection hole 324 and the implement and tightening a nut over the connection pin 105.

A plurality of connection holes 324 may be formed in the implement connector at position spaced apart from each other at predetermined intervals so that the position at which the implement is connected to the implement connection unit can be adjusted.

Each frame coupling pipe 325 and each slide frame 330 have hollow structures to provide the movement guide unit 340 therein. In detail, the ends of each slide frame are disposed in the corresponding frame coupling pipes. The first end of each movement guide unit 340 is movably disposed in the corresponding slide frame, and the second end of the movement guide unit 340 is fixed in the corresponding frame coupling pipe.

For this, each movement guide unit 340 includes a slide plate 341 which has a shape corresponding to the internal shape of the corresponding slide frame and is provided in the slide frame so as to be slidable, a guide rod 342 which is coupled at a first end thereof to the slide plate 341 while a second end thereof protrudes outwards from the end of the slide frame and passes through the corresponding frame coupling pipe 325, and a rod fixing means 343 which is provided on the second end of the guide rod 342 to fix the guide rod to the frame coupling pipe.

In other words, the second end of the guide rod is fixed in the frame coupling pipe by the rod fixing means, and the slide plate coupled to the first end of the guide rod is movably provided in the slide frame. When the slider body is moved by the distance adjustment cylinder, the connection unit body connected to the slider body is also moved with respect to the slide frame. At this time, the slide plate is moved in the slide frame while being supported by the slide frame, thus guiding the connection unit body such that the connection unit body can smoothly slide without wobbling.

Here, a guide plate 344, which has a shape corresponding to the internal shape of the frame coupling pipe, is preferably provided on the second end of each guide rod, not only to support the guide rod and prevent the guide rod from moving in the frame coupling pipe, but also to make it easy to conduct the work of passing the second end of the guide rod through the frame coupling pipe. The guide plate 344 has a shape corresponding to the internal shape of the frame coupling pipe.

Meanwhile, the slider body and the slider connector can be coupled to each other by fastening the fastening part 317 to the connection part 420. Preferably, an insert part 345 is provided to prevent the slider connector from undesirably moving and prevent the slider body or the slider connector from being damaged by pressure concentrated on the junction therebetween by the weight of the implement or stress. The insert part 345 is installed on a second side of the rear surface of the connection unit body 310 and is provided with an insert protrusion 346 which is inserted into the fastening hole 445 of the second connection part.

Because the fastening part 317 which is provided on a first side of the rear portion of the connection unit body and the insert part 345 which is provided on the second side of the rear portion of the connection unit body are connected to the slider body, undesirable movement of the slider connector can be minimized, and pressure applied to the fastening part 317 and the connection part 420 can be distributed, thus preventing the elements from being damaged.

To separate the implement connection unit from the slider bodies, after the retaining means 318 has been removed from the fastening parts, the distance adjustment cylinder is operated so that the slider bodies are moved away from each other, thus separating the fastening parts from the connection parts. Here, because of the weight of the implement connection unit, the fastening parts may not be smoothly separated from the connection parts. To prevent this, a separation guide bar 360 and a spring 365 are provided at a predetermined position on the lower portion of each slider connector.

The separation guide bar 360 is provided such that it passes through a lower portion of a side wall of the slider connector 315 and an end thereof makes contact with a side wall of the slider body 400. Each of opposite ends of the separation guide bar 360 has a stepped protrusion structure to prevent the separation guide bar 360 from being undesirably removed from the side wall of the slider connector.

The spring 365 is configured such that the separation guide bar 360 can be elastically biased in a direction opposite to the contact direction. In detail, as shown in Figs. 23, 24, 30 and 31, the spring is provided around the separation guide bar between the slider connector and the slider body so that the separation guide bar can be elastically operated.

Therefore, when the implement connection units are separated from the slider body, the elastic force of the springs pushes the slider connector away from the slider body, thus making the separation easy.

As shown in Figs. 25 and 32, in the connection device for tractor implements according to the fifth and sixth embodiments, if the connection device includes neither the separation guide bar nor the spring, the connection unit bodies are connected to each other, thus increasing the weight, whereby the slider bodies can be smoothly separated from the implement connection units.

For this, a fastening piece 370 which has a fastening hole 372 therein is provided on an end of each frame coupling pipe 325. A fastening means is inserted into the fastening holes of the fastening pieces 370 so that the connection unit bodies 310 can be removably connected to each other.

The fastening means may include a bolt which is inserted into the fastening holes, and a nut which is coupled to the bolt. Alternatively, without using a separate fastening means, the retaining means may be used as the fastening means. In other words, given the fact that, when the implement connection units are separated from the slider bodies, the retaining means 318 must be separated from the fastening part 317, the retaining means 318 that has been separated from the fastening part 317 may be inserted into the fastening holes 372 and used as the fastening means for connecting the connection unit bodies to each other.

As such, in the case of the implement such as a bale clamp that is provided in such a way that the implement connection units installed on the opposite ends of the implement are connected to each other, the slider bodies and the implement connection units can be connected to each other by means of the loader so as to connect the implement to the loader, without forcing the worker to lift the implement connection units and couple them to the slider bodies.

Therefore, the installation or removal of the implement can be facilitated. To store the implement, the tractor is moved to a place where the implement will be stored, and then the implement is separated from the connection device by the operation of the loader. The implement can be stored in its present state upon being separated. Thereby, the storage of the implement can be facilitated without the implement being damaged.

## Claims

1. A connection device for tractor implements, comprising a main frame (200) mounted to a front end of a loader of a tractor by a coupler (210), a slide-movable slider body (400) mounted on each of both sides of a front surface of the main frame (200), and an implement connection unit (300) installed between the implement (100) and the slider body (400),
the connection device further comprising a distance adjustment cylinder (250) installed between the slider bodies (400) to adjust a distance between the slider bodies (400),
wherein a slider (430) is provided on each of the slider bodies (400) so as to be slidable with respect to the main frame (200), a locking rod (410) is horizontally provided in an upper portion of the slider body (400) so that a hook (316) provided on an upper portion of the implement connection unit (300) is hooked over the locking rod (410) so as to be slidable along the locking rod (410), and a connection part (420) is provided on a lower portion of a side wall of the slider body (400) such that, when the slider body (400) slides, the connection part (420) is coupled to a fastening part (317) provided on a lower portion of the implement connection unit (300), and
when the distance adjustment cylinder (250) is operated, the distance between the slider bodies is adjusted and the fastening part (317) and the connection part (420) are coupled to or separated from each other.

2. The connection device of claim 1, further comprising
a position adjustment cylinder (260) provided in the main frame (200) and connected to either of the slider bodies (400) to move the slider bodies (400) leftwards or rightwards with respect to the main frame (200).

3. The connection device of claim 1, wherein
the fastening part (317) comprises a protrusion protruding towards the connection part (420), and
the connection part (420) comprises a through hole formed in the side wall of the slider body (400) so that when the slider body (400) slides, the protrusion is inserted into the through hole.

4. The connection device of claim 1, wherein the slider (430) comprises a plurality of sliders (430), and auxiliary sliders (435) are provided on a first side or each of both sides of the slider body (400), each of the auxiliary sliders (435) extending from the corresponding slider (430) and having a shape and structure equal to a shape and structure of the slider (430), and
an implement connection part (440) is provided on the auxiliary slider (435) and is connected to second implement (110) that differs in use purpose from the implement (100) connected to the slider bodies (400), so that the implement (100) and the second implement (110) are used for multi-purposes.

5. The connection device of claim 4, wherein an second implement connection unit (350) is installed on the second implement (110), the second implement connection unit (350) being coupled to the implement connection part (440), and a second hook (352) and a through hole (354) are respectively formed in upper and lower portions of the second implement connection unit, and
the implement connection part (440) comprises a locking stopper (442) provided on an upper surface of an upper one of the auxiliary sliders (435) so that the second hook (352) is locked to the locking stopper (442), and a second connection part (444) provided on a portion of a lower one of the auxiliary sliders (435), the second connection part (444) being coupled to the through hole (354) by retaining means

6. The connection device of claim 5, wherein a locking protrusion (450) and a coupling hole (460) are formed on upper and lower portions of a second side of the slider body (400) that is opposite to the auxiliary slider (435), the locking protrusion (450) and a coupling hole (460) respectively corresponding to second hook (352) and the through hole(354), so that the second implement (110) can be connected to the second side of the slider body (400).

7. The connection device of claim 4, wherein when the second implement (110) is either a bale clamp or a fork lift, a support part (120) is installed on the second implement (110) in such a way that the support part (120) protrudes upwards above the main frame (200) to support a rear surface of a target object during a work process.

8. The connection device of claim 1, wherein rails (220) are provided on a front surface of the main frame (200) in such a way that the rails (220) integrally protrude from the main frame (200) and extend in a longitudinal direction of the main frame (200), and
the slider (430) comprises sliders (430) coupled to the respective rails (220) in such a way that each of the sliders (430) has an opening in a portion of one side thereof and receives the corresponding rail (220) therein so that the slider (430) can slide along the corresponding rail.

9. The connection device of claim 8, wherein the main frame (200) comprises an upper frame (200a) and a lower frame (200b),
wherein one of the rails (220) is provided on a front surface of the upper frame (200a) and protrudes forwards, and a remaining one of the rails (220) is provided on an upper surface of the lower frame (200b) and protrudes upwards, and
one of the sliders is provided in an upper portion of a rear surface of the slider body and is oriented rearwards, and a remaining one of sliders is provided in a lower portion of the slider body and is oriented downwards.

10. The connection device of claim 1, wherein a slot (230) is formed in a front surface of the main frame (200) and extends in a longitudinal direction of the main frame (200), and a slider moving hole (240) is longitudinally formed in the main frame (200) such that the slider moving hole (240) communicates with the outside through the slot (230), and
the slider (430) comprises a guide rail (432) protruding outwards from the slider body, the guide rail (432) being disposed in the slot (230), and a moving rail (433) provided on a protruded end of the guide rail (432), the moving rail (433) having a shape corresponding to the slider moving hole (240) and being disposed in the slider moving hole (240) so as to be slidable.

11. The connection device of claim 10, wherein the slider moving hole (240) has an upper moving hole (242) and a lower moving hole (244) that are respectively formed at upper and lower positions based on the slot (230), each of the upper and lower moving holes (242) and (244) having a circular cross-section, wherein the upper moving hole (242) and the lower moving hole (244) form an open space at a junction therebetween.

12. The connection device of claim 10, wherein each of the slider bodies (400) is provided with a support rail (434) receiving the slider (430) therein and enclosing upper and lower outer surfaces of a front part of the main frame (200).

13. The connection device of claim 1, wherein the implement connection unit (300) comprises: a pair of connection unit bodies (310), each of which has a slider connector (315) on a rear portion thereof, the slider connector (315) being provided with the hook (316) and the fastening part (317) so that the connection unit body (310) can be removably mounted to the corresponding slider body (400); an implement connector (320) provided on a front portion of the connection unit body (310) to connect the implement to the implement connection unit; frame coupling pipes (325) horizontally provided parallel to each other in upper and lower portions of the connection unit body (310); each of the frame coupling pipes (325) being filled with fluid; slide frames (330) provided parallel to each other at upper and lower positions between the connection unit bodies (310), each of the slide frames (330) being inserted at opposite ends thereof into the corresponding frame coupling pipes (325); and pistons (335) provided on respective ends of the slide frames (330), each of the pistons (335) disposed in the corresponding frame coupling pipe so as to be movable.

14. The connection device of claim 13, wherein at least one fluid passing hole (337) is formed in each of the pistons (335) so that when the connection unit body (310) moves, the fluid that has been in the corresponding frame coupling pipe (325) passes through the fluid passing hole (337).

15. The connection device of claim 1, wherein the implement connection unit (300) comprises: a pair of connection unit bodies (310), each of which has a slider connector (315) on a rear portion thereof, the slider connector (315) being provided with the hook (316) and the fastening part (317) so that the connection unit body (310) can be removably mounted to the corresponding slider body (400); an implement connector (320) provided on a front portion of the connection unit body (310) to connect the implement to the implement connection unit; hollow frame coupling pipes (325) horizontally provided parallel to each other in upper and lower portions of each of the connection unit bodies (310); hollow slide frames (330) provided parallel to each other at upper and lower positions between the connection unit bodies (310), the hollow slide frames (330) being inserted at opposite ends thereof into the corresponding frame coupling pipes; and movement guide units (340), each of which is movably provided at a first end thereof in the corresponding slide frame (330) and is fixed at a second end thereof to the corresponding frame coupling pipe (325).

16. The connection device of claim 15, wherein each of the movement guide units (340) comprises: a slide plate (341) having a shape corresponding to an internal shape of the corresponding slide frame (330) and being provided in the slide frame (330) so as to be slidable; a guide rod (342) coupled at a first end thereof to the slide plate (341) while a second end thereof protrudes outwards from an end of the slide frame and passes through the corresponding frame coupling pipe (325), and rod fixing means (343) coupled to the second end of the guide rod (342) to fix the guide rod to the frame coupling pipe.

17. The connection device of claim 13 or 15, wherein the slider (430) comprises a plurality of sliders (430), and auxiliary sliders (435) are provided on a side of the slider body (400), each of the auxiliary sliders (435) extending from the corresponding slider (430) and having a shape and structure equal to a shape and structure of the slider (430), wherein a second connection part (444) is provided on a portion of a lower one of the auxiliary sliders (435), the second connection part (444) having a fastening hole (445) therein, and
an insert part (345) is provided on a rear portion of the connection unit body (310) and has an insert protrusion (346) that is inserted into the fastening hole (445).

18. The connection device of claim 13 or 15, wherein each of the slider connectors (315) comprises, in a lower portion thereof, a separation guide bar (360) provided such that the separation guide bar (360) passes through a side wall of the slider connector (315) and an end thereof makes contact with the side wall of the corresponding slider body (400), and a spring (365) elastically biasing the separation guide bar (360) in a direction opposite to a contact direction.

19. The connection device of claim 13 or 15, wherein a fastening piece (370) is provided on an end of each of the frame coupling pipes (325), the fastening piece (370) has a fastening hole (372) so that the connection unit bodies (310) can be coupled to each other by fastening means.
